# EUROPÄISCHE PATENTANMELDUNG

(11) **EP 1 439 284 A1**
(43) Veröffentlichungstag der Anmeldung: **21.07.2004**
(21) Anmeldenummer: 03000963.3
(22) Anmeldetag: 16.01.2003
(51) Int. Cl.: F01D 21/00, F01D 21/04, G01B 13/12

(54) **Verfahren zur Detektion eines Materialabtrags an einer Oberfläche einer Turbinenschaufel**

(71) Anmelder: SIEMENS AKTIENGESELLSCHAFT, 80333 München (DE)
(72) Erfinder: Oechsner, Matthias, 45481 Mülheim a.d. Ruhr (DE); Beutin, Matthias, 46446 Emmerich (DE); Dehnen, Jan, 47279 Duisburg (DE); Woditschka, Frank, 47229 Duisburg (DE); Fischer, Christof, 45468 Mülheim a.d. Ruhr (DE); Stammen, Wolfgang, 46119 Oberhausen (DE)

(57) **Zusammenfassung**

Für den Betrieb einer Turbine ist es wichtig, dass der Spalt zwischen Turbinenschaufel und dem Gehäuse der Turbine nicht zu groß wird.
Nach dem Stand der Technik gibt es keine Verfahren, die den Materialabtrag einer Turbinenschaufel während des Betriebs detektieren.

Die erfindungsgemäßen Verfahren zur Detektion eines Materialabtrages an einem radialen Ende (71) einer Turbinenschaufel (20) nützen die Abhängigkeit eines Messverfahren von der Konzentration oder Menge eines bestimmten Elements oder Zusatzes aus, der in der Turbinenschaufel (20) oder zwischen Turbinenschaufel (20) und Gehäuse (47) vorhanden ist.

## Beschreibung

Die Erfindung betrifft ein Verfahren zur Detektion des Materialabtrags an einer Oberfläche einer Turbinenschaufel gemäß des Anspruchs 1 und 11.

Aus der US-PS 5,097,711, der US-PS 4,896,537 und der US-PS 5,761,956 sind verschiedene Messmethoden und Messvorrichtungen bekannt, um Vibrationen von Turbinenschaufeln auf berührungslosem Wege während des Betriebs der Turbine zu detektieren.

In einer Gasturbine sind die Oberflächen, insbesondere die radialen Enden der Turbinenschaufeln, hohen mechanischen und insbesondere hohen thermischen Belastungen ausgesetzt. Dies führt dazu, dass es unter Einwirkung des vorbeiströmenden Heißgases zu einem Materialabtrag an den radialen Enden der Turbinenschaufeln kommt. Dadurch wird der Spalt zwischen dem radialen Ende einer Turbinenschaufel und dem entsprechenden Gehäuse größer, so dass es zu Wirkungsgradverlusten beim Betrieb der Turbine kommt.

Bisher gibt es kein Verfahren, den Abtrag von Material an einer Oberfläche einer Turbinenschaufel während des Turbinenbetriebs zu detektieren, vielmehr ist dies erst nach Außerbetriebnahme im Rahmen eines Wartungsvorgangs möglich.

Es ist daher Aufgabe der Erfindung, ein Verfahren anzugeben, mit dem während des Turbinenbetriebs der Materialabtrag festgestellt werden kann.

Die Aufgabe wird gelöst durch die Verfahren gemäß Anspruch 1 und 11.

In den Unteransprüchen sind weitere vorteilhafte Verfahrensschritte aufgelistet.
Die in den Unteransprüchen aufgelisteten Maßnahmen können in vorteilhafter Weise miteinander kombiniert werden.

Es zeigen
- Figur 1: schematisch eine Gasturbine,
- Figur 2: einen Ausschnitt einer Turbine,
- Figur 3: eine Turbinenschaufel,
- Figur 4: eine Anordnung, wie das erfindungsgemäße Verfahren durchzuführen ist,
- Figur 5: eine Turbinenschaufel, mit der das erfindungsgemäße Verfahren durchgeführt werden kann.

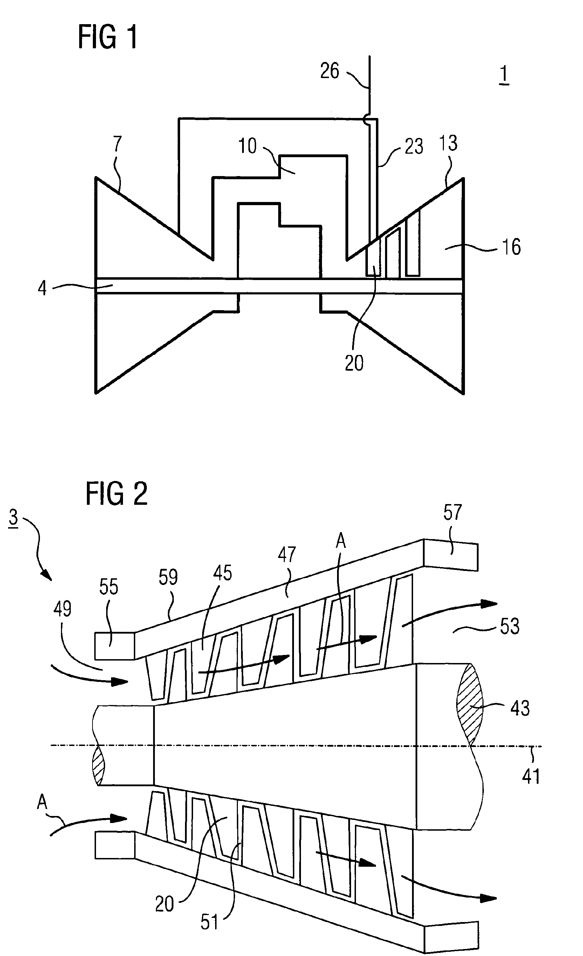

Figur 1 zeigt schematisch in einem Längsschnitt eine Gasturbine 1 als beispielhafte Turbine mit Turbinenschaufeln. Entlang eines Zugankers 4 sind ein Verdichter 7, eine Brennkammer 10 und ein Turbinenteil 13 axial hintereinander angeordnet. Der Turbinenteil 13 weist einen Heißgaskanal 16 auf. Im Heißgaskanal 16 sind Gasturbinenschaufeln 20 angeordnet. Leitschaufel- und Laufschaufelkränze sind wechselnd aufeinanderfolgend vorgesehen. Die Gasturbinenschaufeln 20 werden beispielsweise über eine kombinierte Luft- und/oder Dampfkühlung gekühlt. Dazu wird beispielsweise dem Verdichter 7 Verdichtungsluft entnommen und über eine Luftzuführung 23 den Gasturbinenschaufeln 20 zugeführt. Über eine Dampfzuführung 26 wird den Gasturbinenschaufeln 20 beispielsweise auch Dampf zugeführt. Vorzugsweise stammt dieser Dampf aus einer Dampfturbine eines kombinierten Gas- und Dampfprozesses.

In Figur 2 ist in vereinfachter Darstellung in einem Längsschnitt ein Ausschnitt einer Strömungsmaschine 3 am Beispiel einer Turbine 59 gezeigt. Die Turbine 59 weist einen Läufer 43 auf, der sich entlang der Rotationsachse 41 der Turbine 59 erstreckt. Weiter weist die Turbine 59 entlang der Achse 41 aufeinander folgend einen Einströmbereich 49, einen Beschaufelungsbereich 51 sowie einen Abströmbereich 53 auf. In dem Beschaufelungsbereich 51 sind rotierbare Laufschaufeln 20 und feststehende Leitschaufeln 45 angeordnet.
Die Laufschaufeln 20 sind dabei an dem Turbinenläufer 43 befestigt, während die Leitschaufeln 45 an einem den Turbinenläufer 43 umgebenden Leitschaufelträger 47 angeordnet sind.
Durch die Welle 43, den Beschaufelungsbereich 51 sowie den Leitschaufelträger 47 ist ein ringförmiger Strömungskanal für ein Strömungsmedium A, zum Beispiel Heißgas, gebildet. Der zur Zufuhr des Strömungsmediums A dienende Einströmbereich 49 wird durch ein stromaufwärts des Leitschaufelträgers 59 angeordnetes Einströmgehäuse 55 in radialer Richtung begrenzt. Ein Abströmgehäuse 57 ist stromabwärts am Leitschaufelträger 47 angeordnet und begrenzt den Abströmbereich 53 in radialer Richtung. Im Betrieb der Turbine 59 strömt das Strömungsmedium A, hier ein Heißgas, von dem Einströmbereich 49 in den Beschaufelungsbereich 51, wo das Strömungsmedium A unter Expansion Arbeit verrichtet, und verlässt danach über den Abströmbereich 53 die Turbine 59.

Beim Durchströmen des Beschaufelungsbereichs 51 entspannt sich das Strömungsmedium A und verrichtet Arbeit an den Laufschaufeln 20, wodurch diese in Rotation versetzt werden.

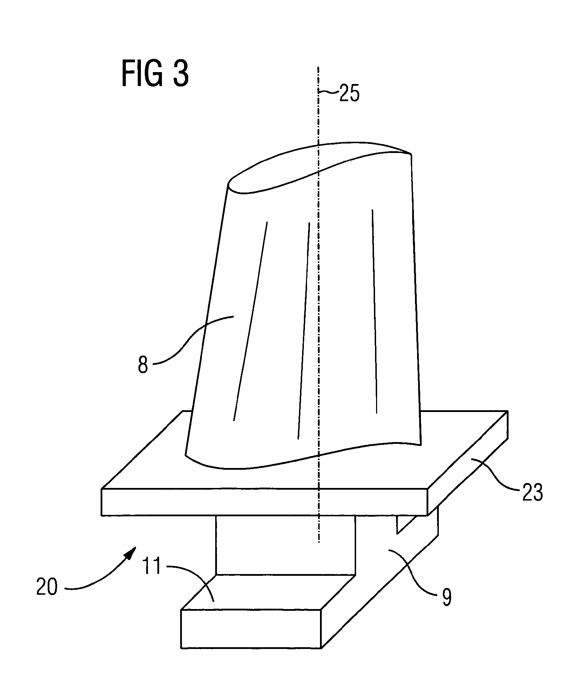

Figur 3 zeigt in perspektivischer Ansicht eine Laufschaufel 20, die sich entlang einer Längsachse 25 in radialer Richtung erstreckt. Die Laufschaufel 20 weist entlang der Längsachse aufeinander folgend einen Befestigungsbereich 9, eine daran angrenzende Schaufelplattform 23 sowie einen Schaufelblattbereich 8 auf. Im Befestigungsbereich 9 ist ein Schaufelfuß 11 gebildet, der zur Befestigung der Laufschaufel 20 an der Welle einer in der Figur 3 nicht dargestellten Strömungsmaschine dient. Der Schaufelfuß 11 ist als Hammerkopf ausgestaltet. Andere Ausgestaltungen, beispielsweise als Tannenbaum- oder Schwalbenschwanzfuß sind möglich. Bei herkömmlichen Laufschaufeln 20 werden in allen Bereichen 9, 23, 7 der Laufschaufel 20 massive metallische Werkstoffe verwendet. Die Laufschaufel 20 kann hierbei durch ein Gussverfahren, durch ein Schmiedeverfahren, durch ein Fräsverfahren oder Kombinationen daraus gefertigt sein.

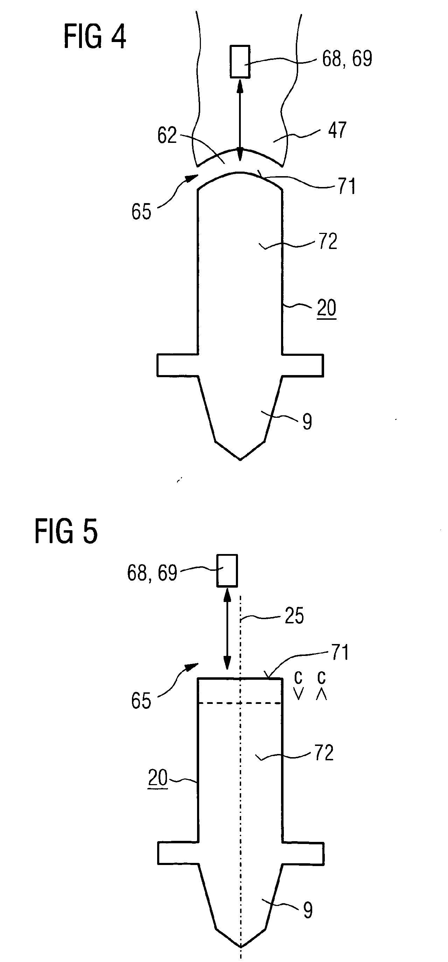

Figur 4 zeigt schematisch eine Anordnung, um ein erfindungsgemäßes Verfahren durchführen zu können.

Die Turbinenschaufel 20 hat eine äussere Oberfläche 72 und weist in der Nähe des Gehäuses 47 ein radiales Ende 71 auf als ein Teil der Oberfläche 72. Andere Teile der Oberflächen sind die Eintritts- oder Austrittskante. Beispielhaft wird das radiale Ende 71 benutzt, um das Verfahren zu erläutern.

Zwischen dem radialen Ende 71 der Turbinenschaufel 20 und dem Gehäuse 47 besteht ein Spalt 62. Der Spalt 62 verändert sich aufgrund von Vibrationen und thermischen Ausdehnungen der Turbinenschaufel 20 und des Gehäuses 47 u.a. beim An- oder Abfahren der Turbine. Die Vibrationen können beim Messverfahren herausgefiltert werden.
Im thermischen Gleichgewicht zwischen Gehäuse 47 und Turbinenschaufel 20 ändert sich der Spalt 62 aufgrund der Erwärmung nicht mehr.
Jedoch kommt es während des Betriebes längerfristig zu einem Materialabtrag an dem radialen Ende 71 der Turbinenschaufel 20. Dadurch wird der Spalt 62 kontinuierlich oder diskontinuierlich mit der Zeit größer.

Dem Gas, das an der Turbinenschaufel 20 vorbeiströmt, wird ein Zusatz 65 hinzugegeben, der dann durch den Spalt 62 zwischen dem Gehäuse 47 und dem radialen Ende 71 der Turbinenschaufel 20 vorbeiströmt.

Der Zusatz 65 weist bezogen auf das Gas immer eine bestimmte Konzentration auf. Wird der Spalt 62 größer, so steigt die absolute Menge des Zusatzes 65, der durch den Spalt 62 vorbeiströmt, an.
Ein Empfänger 68 kann die Durchflussmenge des Zusatzes 65 pro Zeiteinheit im Spalt 62 oder die absoluten Anteil des Zusatzes 65 im Spalt messen.
Der Empfänger 68 ist bspw. im Gehäuse 47 bspw. in der Nähe des Spalts 62 angeordnet.
Die Messung kann beispielsweise dadurch erfolgen, dass der Zusatz 65 eine Wellenlänge eines Senders 69 absorbiert oder streut, der ein Ausgangssignal in den Spalt 62 sendet. Strömt eine größere Menge des Zusatzes 65 durch den Spalt 62, so wird mehr Strahlung (Ausgangssignal) absorbiert oder gestreut, die nicht mehr als Empfangssignal in den Empfänger 68 zurückstrahlt. Die Zunahme der Absorption und/oder Streuung ist ein Maß für die Vergrößerung des Spalts 62 mit der Zeit. Somit ist der Materialabtrag der Turbinenschaufel online detektierbar.
Weitere Wechselwirkungsmechanismen zwischen Ausgangsignal und Zusatz 65 sind denkbar, bei denen sich ein Zusammenhang zwischen dem Anteil des Zusatzes 65 im Spalt 62 und Empfangssignal ergibt.

Der Zusatz 65 kann aber auch von sich aus z.B. durch seine hohe Temperatur eine entsprechende Strahlung, bspw. Infrarotstrahlung abgeben. Die Infrarotstrahlung wird von dem Empfänger 68 detektiert. Strömt ein größerer Anteil des Zusatzes 65 im Spalt 62 vorbei, so erhöht sich auch die Intensität der Infrarotstrahlung, die ein Maß für die Zunahme des Spalts 62 ist. Ein Sender 69 wird dann nicht benötigt.

Ein Empfänger 68 wie er beispielsweise in der US-PS 5,097,711 US-PS 4,896,537 oder US-PS 5,761,956 beschrieben ist, kann hier verwendet werden.

Figur 5 zeigt schematisch eine weitere Anordnung um ein erfindungsgemäßes Verfahren durchführen zu können.

Die Turbinenschaufel 20 weist in radialer Richtung 25 einen Konzentrationsgradienten eines Messmaterials oder verschiedene Arten eines Messmaterials auf.
Die Konzentration des Messmaterials nimmt beispielsweise von dem radialen Ende 71 der Turbinenschaufel 20 von einem maximalen Wert zu einem minimalen Wert längs der Längsachse 25 zum Schaufelfuß 9 hin ab oder zu. Die Zunahme oder Abnahme des Messmaterials kann kontinuierlich oder diskontinuierlich erfolgen. Eine diskontinuierliche Zu- oder Abnahme gibt es bspw. in einem Schichtsystem, bei dem die Schichten verschiedene Konzentrationen des Messmaterials aufweisen.
Ebenso kann in den verschiedenen Schichten verschiedene Arten des Messmaterials verwendet werden.
Wenn nur eine Schicht vorhanden ist, verändert sich die Art des Messmaterials in radialer Richtung 25.

Ein Empfänger 68 kann die Konzentration des Messmaterials oder die Art des Messmaterials bestimmen. Das Messmaterial sendet bspw. eine Strahlung aus (bspw. radioaktive Strahlung, Lumineszenzstrahlung, d.h. das Messmaterial ist zumindest ein radioaktives Element oder ein Element, das Lumineszenz oder Phosphoreszenz zeigt).
Erfolgt nun ein Abtrag von Material an dem radialen Ende 71 der Turbinenschaufel 20, so ist an der Schaufelspitze 71 an der Oberfläche eine andere Konzentration des Messmaterials vorhanden. Somit wird bspw. mehr oder weniger Lumineszenzstrahlung abgestrahlt. Diese Änderung wird vor dem Empfänger 68 detektiert. Somit ist ein Abtrag von Material an dem radialen Ende 71 einer Turbinenschaufel 20 detektierbar.

Erfolgt nun ein Abtrag von Material an dem radialen Ende 71 der Turbinenschaufel 20 mit verschiedenen Arten von Messmaterialien (verschiedene radioaktive Strahler, verschieden Lumineszenzstrahler (d.h. strahlen verschiedene Wellenlängen aus)), so ist an der Schaufelspitze 71 an der Oberfläche eine andere Art des Messmaterials vorhanden. Die Art der Strahlung (z.B. Wellenlänge) des Messmaterials kann ebenso vom Empfänger 68 detektiert werden.

Ebenso kann ein Sender 69 verwendet werden. Der Sender 69 sendet ein Ausgangssignal in Richtung radiales Ende 71 der Turbinenschaufel 20. Ist ein größerer Anteil des Messmaterials an dem radialen Ende 71 oder eine andere Art des Messmaterials vorhanden, so wird bspw. mehr Strahlung (Ausgangssignal) absorbiert oder gestreut, die nicht mehr als Empfangssignal in den Empfänger 68 zurückstrahlt. Die Zunahme der Absorption oder Streuung ist ein Maß für die Vergrößerung des Spalts 62 mit der Zeit.
Weitere Wechselwirkungsmechanismen zwischen Ausgangsignal und Messmaterial sind denkbar, bei denen sich ein Zusammenhang zwischen der Konzentration des Messmaterials und dem Empfangssignal ergibt.

Ebenso kann ein Gas, das am radialen Ende 71 vorbeiströmt, mit dem Messmaterial zu einem Abgasprodukt reagieren.
Je höher oder je niedriger die Konzentration des Abgasproduktes an der Oberfläche des radialen Endes ist, desto grösser oder niedriger ist der Anteil des Abgasproduktes.

## Patentansprüche

1. Verfahren zur Detektion des Materialabtrags an der Oberfläche (72) einer Turbinenschaufel (20),
die sich in einer radialen Richtung (25) erstreckt und die ein Messmaterial aufweist,
dessen Konzentration in radialer Richtung (25) ausgehend von der Oberfläche (72) zu oder abnimmt, oder dessen Art sich in radialer Richtung (25) ausgehend von der Oberfläche (72) ändert,
wobei ein Empfänger (68) benutzt wird,
der Empfangssignale empfängt,
die von der Konzentration des Messmaterials oder der Art des Messmaterials abhängen, und
der Materialabtrag anhand der Empfangssignale bestimmt wird.

2. Verfahren nach Anspruch 1,
**dadurch gekennzeichnet, dass**
der Materialabtrag anhand der Empfangssignale aus dem Bereich der Oberfläche (72) am radialen Ende (71) der Turbinenschaufel (20) bestimmt wird.

3. Verfahren nach Anspruch 1 oder 2,
**dadurch gekennzeichnet, dass**
das Empfangssignal eine Strahlung ausgehend von dem radialen Ende (71) oder Oberfläche (72) ist.

4. Verfahren nach Anspruch 1,
**dadurch gekennzeichnet, dass**
ein Sender (69) benutzt wird, der ein Ausgangssignal sendet,
das von der Konzentration des Messmaterials oder der Art des Messmaterials beeinflusst wird, und
dass das so beeinflusste Signal zumindest teilweise vom Empfänger (68) empfangen wird.

5. Verfahren nach Anspruch 1 oder 2,
**dadurch gekennzeichnet, dass**
die Konzentration des Messmaterials kontinuierlich zuoder abnimmt.

6. Verfahren nach Anspruch 1 oder 2,
**dadurch gekennzeichnet, dass**
die Konzentration des Messmaterials diskontinuierlich zu- oder abnimmt.

7. Verfahren nach Anspruch 6,
**dadurch gekennzeichnet, dass**
die Oberfläche (72) mehrere Schichten aufweist,
wobei jede Schicht eine andere Konzentration des Messmaterials oder eine andere Art des Messmaterials aufweist.

8. Verfahren nach Anspruch 1,
**dadurch gekennzeichnet, dass**
der Materialabtrag anhand des im Abgas der Turbine (1) enthaltenen Messmaterials bestimmt wird.

9. Verfahren nach Anspruch 3,
**dadurch gekennzeichnet, dass**
die Strahlung eine Lumineszenzstrahlung des Messmaterials ist.

10. Verfahren nach Anspruch 3,
**dadurch gekennzeichnet, dass**
das Ausgangssignal von dem Messmaterial absorbiert oder in sonstiger Weise beeinflusst wird.

11. Verfahren zur Detektion des Materialabtrages an einem radialen Ende (71) einer Turbinenschaufel (20),
wobei ein Empfänger (68) benutzt wird, und
wobei einem Gas, das in einem Spalt (62) zwischen dem radialen Ende (71) und einem Gehäuse (47) vorbeiströmt, ein Zusatz (65) beigemischt wird,
dessen zeitliche Durchflussmenge für den Empfänger (68) messbar ist.

12. Verfahren nach Anspruch 11,
**dadurch gekennzeichnet, dass**
der Zusatz (65) ein Empfangssignal an den Empfänger (68) sendet.

13. Verfahren nach Anspruch 12,
**dadurch gekennzeichnet, dass**
das Empfangssignal eine Infrarotstrahlung ist.

14. Verfahren nach Anspruch 11,
**dadurch gekennzeichnet, dass**
ein Sender (69) benutzt wird, und
dass der Sender (69) ein Ausgangssignal sendet,
das von dem Zusatz (65) beeinflusst wird, und
dass das so beeinflusste Signal vom Empfänger (68) empfangen wird.

15. Verfahren nach Anspruch 14,
**dadurch gekennzeichnet, dass**
das Ausgangssignal vom Zusatz (65) absorbiert oder gestreut wird.
